# EUROPÄISCHE PATENTSCHRIFT

(11) **EP 1 852 672 B1**
(45) Veröffentlichungstag und Bekanntmachung des Hinweises auf die Patenterteilung: **06.04.2011**
(21) Anmeldenummer: 07009054.3
(22) Anmeldetag: 04.05.2007
(51) Int. Cl.: G01B 3/56, G01B 7/30, G01D 5/14, G01D 5/16

(54) **Handgeführtes Winkel- oder Gradmessgerät**
Portable goniometer
Goniomètre portable

(30) Priorität: 05.05.2006 DE 102006020887
(43) Veröffentlichungstag der Anmeldung: 07.11.2007
(73) Patentinhaber: Preisser Messtechnik GmbH, 72501 Gammertingen (DE)
(72) Erfinder: Friebe, Manfred, 72119 Ammerbuch (DE); Lorch, Siegfried, 72818 Trochtelfingen (DE)
(74) Vertreter: Rüger, Barthelt & Abel Patentanwälte

(56) Entgegenhaltungen:
- WO-A-94/07108
- DE-A1- 3 217 424
- DE-U1- 8 902 588
- DE-U1- 8 902 987
- DE-U1- 9 112 094
- US-B1- 6 720 763

## Beschreibung

Die Erfindung betrifft ein handgeführtes Winkel- oder Gradmessgerät mit zwei um eine gemeinsame Achse verschwenkbar aneinander gelagerten Messelementen.

Winkel- oder Gradmessgeräte mit zwei um eine gemeinsame Achse verschwenkbar aneinander gelagerten Messelementen, die insbesondere Messschenkel aufweisen, welche bspw. in Gestalt von Schienen oder Linealen ausgebildet sind, sind in einer Vielzahl von Ausführungsformen bekannt. Sie sind häufig mit einer Feststelleinrichtung versehen, die es erlaubt die beiden Messschenkel in einer jeweils gewünschten gegenseitigen Winkellage lösbar gegeneinander zu verriegeln. Diese mechanischen Winkel- oder Gradmesser tragen eine Skala, die auf einen Messschenkel angeordnet ist, während an dem anderen Messschenkel ein Zeiger oder dergleichen vorgesehen ist, der mit der Skala zusammenwirkt, um die Ablesung der Messwerte zu ermöglichen (vgl. bspw. DE 91 12 094 U1).

Um die Handhabung und die Messwertablesung zu erleichtern, gibt es auch sogenannte elektronische Winkel- oder Gradmesser, die mit elektronischen Sensormitteln ausgestattet sind, welche die gegenseitige Winkellage der Messschenkel erfassen und ein dafür kennzeichnendes Signal aussenden, das eine zugeordnete Anzeigeeinrichtung ansteuert, die bspw. auf einem Display mit LCDs den jeweiligen Messwert digital oder analog anzeigt (vgl. bspw. DE 8902588 U1 und WO 94/07108).

Die die gegenseitige Winkellage der Messschenkel erfassenden Sensormittel sind bspw. optoelektronischer Art und weisen eine mit einem Messschenkel verbundene und eine Sensorelement bildende Encoderscheibe mit Sektoren unterschiedlicher Lichtdurchlässigkeit und dieser zugeordnete optische Signalgeber auf, die die Encoderscheibe abtasten und für deren Winkelstellung kennzeichnende Signale abgeben. Diese Signale werden in einer Signalverarbeitungsschaltung digital verarbeitet, wobei die Messwerte auf einem Display bspw. digital angezeigt werden. Ein solches elektronisches Winkelmessgerät ist in der US-A-4,476,567 beschrieben. Es ist zum festen Einbau in ein Flugzeug bestimmt, um die jeweilige Neigung von Steuerruderteilen zu erfassen. Für den Handgebrauch ist es weder bestimmt, noch geeignet.

Aus der DE 32 17 424 A1 ist ein Winkelmesser als Handmessgerät mit elektronischer Messwertanzeige bekannt, der eine kreisrunde Trägerplatte aufweist, die mit einer Riegelschiene eine feste Einheit bildet und auf die eine Kreisteilscheibe aufgesetzt ist, die entweder direkt auf der Trägerplatte oder in einem gewissen Abstand von dieser befestigt ist. Mit der Trägerplatte ist eine Aufnahmeplatte für eine bewegliche Winkelschiene drehbeweglich verbunden, an der eine Ableseeinrichtung entweder fest oder justierbar befestigt ist. In einer Ausführungsform ist die Kreisteilscheibe mit kleinen Permanentmagneten als Kreisteilung bestückt, wobei die Permanentmagneten mit einer oder mehreren Feldplatten als Ableseeinrichtung zusammenwirken, so dass bei einer relativen Bewegung um eine gemeinsame Drehachse elektrische Signale abgegeben werden, aus denen die Größe der relativen Winkelbewegung zwischen der Trägerplatte und der beweglichen Platte abgeleitet werden können. Die Permanentmagnete sind auf einer Kreisspur von dem Drehpunkt angeordnet, wobei zur Richtungserkennung eine zweite Spur vorgesehen ist. Die von den Permanentmagneten und der Ableseeinrichtung gebildeten Sensormittel liegen somit in verhältnismäßig großen radialen Abstand außerhalb der die Trägerplatte mit der beweglichen Platte verbindenden Lagermittel.

Schließlich ist aus der DE 89 02 987 U1 ein Winkelmesser bekannt, dessen beide Schenkel an ihrem einen Ende durch ein Gelenk miteinander verbunden sind und von denen ein Schenkel als Hohlprofil und der andere als ein das Hohlprofil dreiseitig umfassendes U-Profil ausgebildet ist. In dem Hohlprofil ist ein Potentiometer untergebracht, dessen durch eine Nabenmutter verlaufende Welle mit dem U-Profil drehfest gekuppelt ist. Das Potentiometer ist mi einer in dem Hohlprofil untergebrachten elektrischen Messeinrichtung verbunden, die eine an einem Messfenster ablesbare, dem Öffnungswinkel der Schenkel proportional Anzeige liefert.

Daneben gibt es in der Praxis auch handgeführte elektronische Grad- und Winkelmessgeräte, bei denen z.B. ein Messschenkel in Gestalt einer Wasserwaage ausgebildet ist. Bei diesen Geräten ist häufig die Winkelmessgenauigkeit für höhere Anforderungen nicht ausreichend. Es sind auch Geräte bekannt, die insbesondere optoelektronische, induktive oder kapazitive Sensormittel haben und mit ihrem zugehörigen, auf einen Messschenkel aufgesetzten Gehäuse einen unerwünscht großen Platzbedarf aufweisen, der verbunden mit einem unverhältnismäßig großen Kostenaufwand für das Messsystem, den Einsatzbereich solcher Winkel- oder Gradmessgeräte einschränkt.

Aufgabe der Erfindung ist es deshalb ein handgeführtes Winkel- oder Gradmessgerät zu schaffen, das sich bei einfachem robustem Aufbau durch hohe Messgenauigkeit und leichte Handhabung auszeichnet, im Wesentlichen keinen zusätzlichen Platzbedarf für die Sensormittel aufweist und kostengünstig herstellbar ist.

Zur Lösung dieser Aufgabe weist das erfindungsgemäße Winkel- oder Gradmessgerät die Merkmale des Patentanspruchs 1 auf.

Bei dem neuen handgeführten Winkel- oder Gradmessgerät sind magnetfeldempfindliche Sensormittel zur Erfassung der relativen Winkellage der beiden Messelement zueinander vorgesehen, die im Bereiche zu der gemeinsamen Achse der beiden Messschenkel in den Messelementen integriert angeordnet sind. Die magnetfeldempfindlichen Sensormittel enthalten wenigstens zwei berührungslos zusammenwirkende Sensorelemente von denen eines permanentmagnetische Mittel aufweist und an dem einen Messelement und das andere an dem anderen Messelement jeweils fest angeordnet ist und von denen wenigstens eines ein für die jeweilige Winkelstellung kennzeichnendes elektrisches Signal abgeben kann. Das Signal von den Sensormitteln wird von einer elektronischen Signalverarbeitungsschaltung weiter verarbeitet, die eine Messwertanzeigeeinrichtung ansteuert, welche die Messwerte analog oder digital wiedergibt. Das Gerät verfügt über eine eigene Stromquelle, bspw. in Gestalt einer Batterie oder von einer Solarzelle, die auf einem der Messelemente oder einem mit diesem verbundenen Teil angeordnet ist, so dass das Gerät autonom ist. Die Messwertanzeigeeinrichtung kann unmittelbar auf einem der Messelemente oder auf einem damit verbundenen Teil angeordnet sein, wie dies in der Regel der Fall ist, doch sind auch Ausführungsformen denkbar, bei denen sie an einem entfernten Ort vorgesehen ist, so dass an dem Gerät selbst, auf einem der Messelemente, eine elektrische Anschlusseinrichtung für die Messwertanzeigeeinrichtung vorgesehen ist. Eine Integrierung von unterschiedlichen Schnittstellen wie RS 232, USB, Bluetooth usw. ist zur direkten Datenausgabe des Messwertes ebenso möglich.

Um die mit Rücksicht auf eine hohe Messgenauigkeit erforderliche Konstanz des Luftspalts zwischen dem berührungslos zusammenwirkenden Sensorelementen der Sensormittel zu gewährleisten und um gleichzeitig Raum für die Unterbringung der Sensorelemente zu finden, weist wenigstens eines der beiden Messelemente eine als Lagermittel für das andere Messelement dienende, zu der gemeinsamen Achse koaxiale Nabe auf, die mit einem Hohlraum ausgebildet ist, in dem wenigstens ein Sensorelement angeordnet ist, während bspw. das andere Sensorelement in den Hohlraum der Nabe hineinreichend an seinem zugeordneten Messelement befestigt ist. Der Hohlraum der Nabe ist allseitig geschlossen, so dass das darin enthaltene Sensormittel nach außen hin abgekapselt ist. Damit ist eine Beeinträchtigung der Sensormittel durch äußere Umwelteinflüsse, bspw. Staub und Fremdkörper, weitgehend ausgeschlossen, was für ein Handmessgerät, das unter wechselnden Einsatzbedingungen verwendet wird, von großer Bedeutung ist. Dies ist außerdem bei einem magnetischen System sehr wichtig, um gegebenenfalls extern erzeugte Magnetfelder abzuschirmen.

In einer bevorzugten Ausführungsform ist ein Sensorelement der Sensormittel auf dem Halleffekt beruhend ausgebildet, während das andere Sensorelement ein axial polarisierter Permanentmagnet ist, der auf seiner wirksamen Stirnfläche wenigstens zwei Bereiche unterschiedlicher Polarität aufweist und koaxial zu der gemeinsamen Drehachse der beiden Messelemente angeordnet ist. Das auf dem Halleffekt beruhende Sensorelement kann mit Vorteil als Chip ausgebildet sein, das eine relative Drehbewegung des anderen Sensorelements erfassende Hallsensoren, eine integrierte Signalausgangs- und Treiberschaltung für die Hallsensoren und elektrische Anschlussmittel aufweist. Die Hallsensoren sind bspw. in den vier Quadranten eines Quadrates angeordnet und erlauben es, im Zusammenwirken mit dem Permanentmagneten des anderen Sensorelements den Absolutwert der gegenseitigen Winkellage exakt zu definieren.

Solche auf dem Halleffekt beruhende Sensoren sind an sich bekannt. Beispiele dafür sind beschrieben in der WO 03/008911 A1 und der EP 0 575 971 C1. Diese bekannten Sensoren sind aber Teile von Sensormitteln, die zur Drehwinkelerfassung einer Lenksäule eines Kraftfahrzeuges oder der Drehwinkelstellung der Drosselklappe im Kraftstoffversorgungssystem eines Kraftfahrzeuges, etc., bestimmt sind. Sie in die verhältnismäßig flachen Messelemente eines handgeführten Winkel- oder Gradmessgerätes integriert zu verwenden, das eine autonome Stromversorgung, insbesondere durch eine Batterie hat, erschließt diesen Sensormitteln ein neues Verwendungsgebiet. Überraschenderweise lässt sich so ein Handmessgerät schaffen, das sich durch hohe Messgenauigkeit auszeichnet, eine Absolutwertmessung des Drehwinkels zwischen den beiden Messelementen ermöglicht und dessen Außenabmessungen gegenüber einem herkömmlichen Winkel- oder Gradhandmessgerät mit analoger Skalenanzeige der Winkelwerte kaum vergrößert sind.

In einer alternativen Ausführungsform können die Sensormittel auch so gestaltet sein, dass ein Sensorelement als ein magnetoresistives Sensorelement ausgebildet ist, das mit einem radial oder axial polarisierte Bereiche unterschiedlicher Polarität aufweisenden Permanentmagnetring oder Permanentmagnetringsegment als anderem Sensorelement berührungslos zusammenarbeitet. Der Permanentmagnetring ist koaxial zu der gemeinsamen Achse der beiden Messelemente angeordnet. An seine Stelle kann auch ein auf einem kreisrunden Träger angeordnetes permanentmagnetisches Band mit Bereichen unterschiedlicher Polarität treten.

Magnetoresistive Sensormittel sind an sich ebenfalls bekannt. Sie beruhen auf dem Effekt, dass die Leitfähigkeit spezieller magnetischer Legierungen vom Winkel zwischen der Magnetisierung einer ferromagnetischen Streifens und der Stromrichtung durch den Streifen beeinflusst wird. Um die Messanordnung empfindlicher und unabhängig von thermischer Drift zu machen, werden magnetoresistive Sensoren häufig als Vollbrücke eingesetzt. Bekannte Einsatzgebiete solcher magnetoresistiver Sensormittel, auch in Form von sogenannten GMR-Sensoren (Giant Magneto-Resistor) sind Drehzahlmesssysteme, Drehwinkelmesssystem an Drehmomentmessflanschen und dergleichen. Eine Verwendung für Winkel- oder Gradhandmessgeräte der hier in Frage stehenden Art kam bisher nicht in Frage.

Weitere Ausgestaltungen und Abwandlungen des erfindungsgemäßen handgeführten Winkel- oder Gradmessgerätes sind Gegenstand von den abhängigen Ansprüchen. Zu diesen Abwandlungen gehört auch eine Ausführungsform, bei der wenigstens eines der Messelemente über Getriebemittel mit einem längsverschieblich gelagerten Messteil gekoppelt ist, derart, dass eine Längsverschiebung des Messteils bezüglich der gemeinsamen Achse der beiden Messelemente in eine definierte Drehbewegung des zugeordneten Sensorelementes umsetzbar ist. Damit wird das Winkelmessgerät zu einem Längenmessgerät ohne den erfinderischen Gedanken zu verlassen. Dabei sind auch Ausführungsformen denkbar, bei denen die Längenmessfunktion mit der Winkel- oder Gradmessfunktion in einem einzigen Handmessgerät vereinigt ist.

In der Zeichnung sind Ausführungsbeispiele des Gegenstandes der Erfindung dargestellt. Es zeigen:
- Fig. 1: Ein digitales Handwinkelmessgerät gemäß der Erfindung in schematischer, perspektivischer Darstellung,
- Fig. 2: das Messgerät nach Figur 1 mit abgenommener Abdeckung der Messelemente, in einer entsprechenden Darstellung,
- Fig. 3: ein Messelement des Messgeräts nach Figur 1 in der Draufsicht mit abgenommener Haube,der Anzeigeeinrichtung,
- Fig. 4: das Handmessgerät nach Figur 1, geschnitten längs der Linie IV-IV der Figur 1, in einer Seitenansicht und in einem anderen Maßstab,
- Fig. 5: die Sensormittel des Handmessgerätes nach Figur 2, in einer schematischen Prinzipdarstellung,
- Fig. 6: Sensormittel für das Handmessgerät nach Figur 1 in magnetoresistiver Ausführung in perspektivischer schematisierter Darstellung und
- Fig. 7: das Handmessgerät nach Figur 1 in einer abgewandelten Ausführungsform als Längenmessgerät in schematischer Darstellung in einer Draufsicht mit abgenommener Abdeckung der Messelemente.

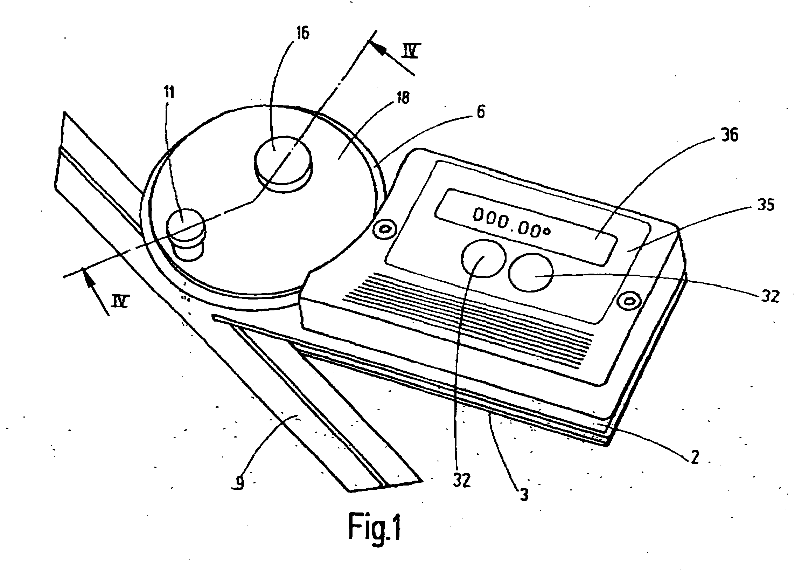

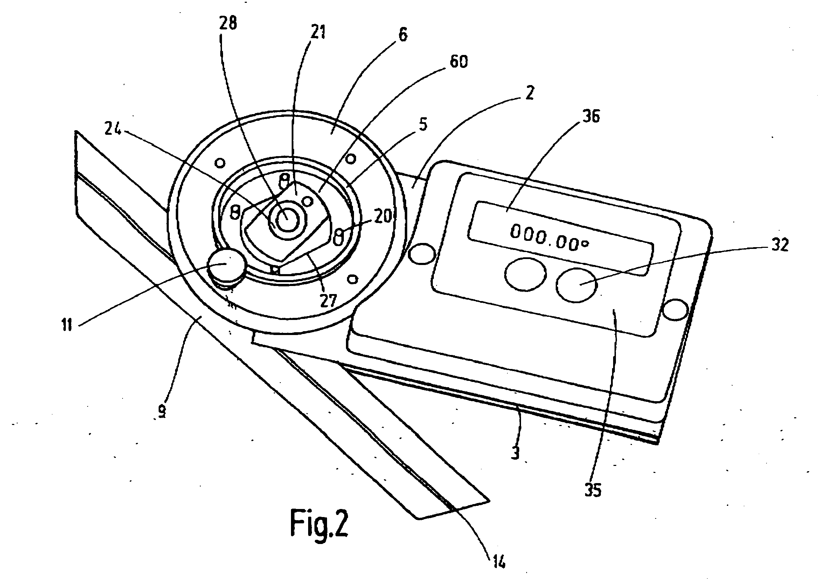

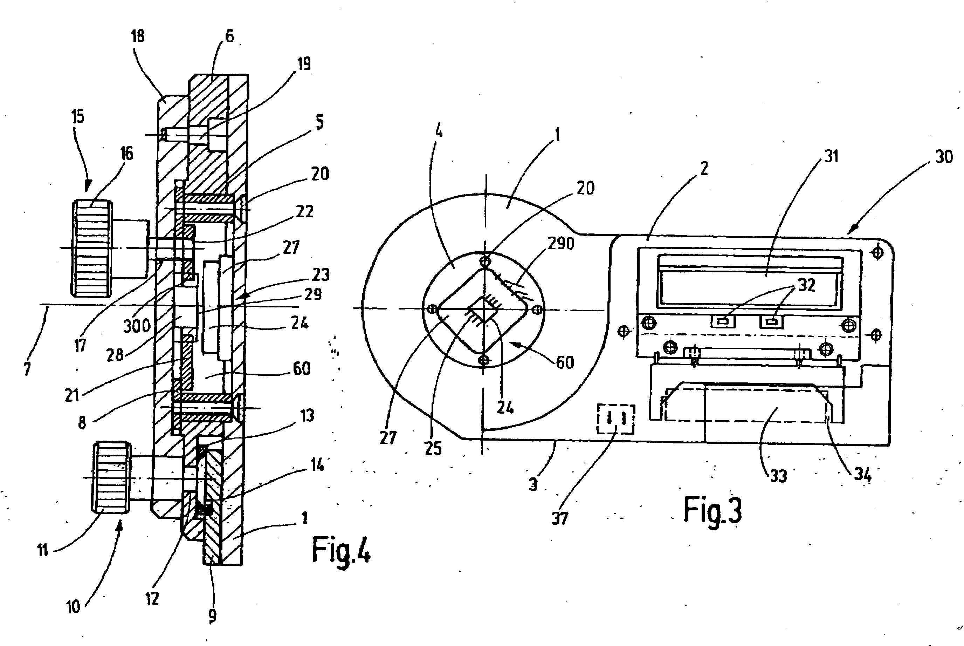

Das in den Figuren 1 bis 4 dargestellte Winkelmessgerät ist ein batteriebetriebenes, digitales Handmessgerät. Es weist ein erstes Messelement in Gestalt einer im Wesentlichen kreisförmigen, ebenen Platte 1 auf, an die eine schenkelförmiges Plattenteil 2 angeformt ist, das eine maßgenaue Anlagekante 3 aufweist. Das erste Messelement 1 ist mit einer konzentrischen, zylindrischen Vertiefung 4 versehen, in die eine ebenfalls koaxiale zylindriche Nabe 5 in Gestalt einer zylindrischen Büchse eingefügt ist. Die hohlzylindrische Nabe 5 umschließt einen zylindrischen Hohlraum 60. Auf ihrer zylindrischen Außenfläche ist ein zweites Messelement 6 drehbar gelagert, das ebenfalls im wesentlichen in Gestalt einer kreisrunden Platte ausgebildet ist, die auf der zugewandten Fläche des ersten Messelements 1 aufliegt. Die beiden Messelemente 1, 6 sind deshalb um eine gemeinsame Achse 7 (Figur 4) relativ zueinander verdrehbar aneinander gelagert. Auf die Nabe 5 ist eine flache Ringscheibe 8 aufgesetzt, die das zweite Messelement 6 radial übergreift und es damit mit geringem Spiel axial gegenüber dem ersten Messelement 1 hält. Die Ringscheibe 8 übergreift auf ihrer radial innenliegenden Seite die Nabe 5, so dass sie ringsumlaufend teilweise den Hohlraum 60 überdeckt.

An dem zweiten Messelement 6 ist eine als Lineal ausgebildete Schiene 9 längsverschieblich gelagert, die auf dem ersten Messelement I aufliegt und auf diesem geführt ist. Die längsverschiebliche Schiene 9 kann in ihrer jeweiligen Stellung zu dem zweiten Messelement 6 fixiert werden. Dazu ist ein Fixiermechanismus 10 vorgesehen, der eine Fixierschraube 11 aufweist, die in eine entsprechende Gewindebohrung 12 des zweiten Messelementes 6 eingeschraubt ist und auf ein im Querschnitt im Wesentlichen U-förmiges Führungselement 13 drückt, das in der aus Figur 4 ersichtlichen Weise mit einem Schenkel auf der Oberseite der Schiene 9 aufliegt und mit einem anderen Schenkel in eine Längsnut 14 der Schiene 9 eingreift und auf deren Grund abgestützt ist. Durch Festziehen und Lösen der Fixierschraube 11 kann die Schiene 14 relativ zu den zweiten Messelement 6 in ihrer Längsrichtung fixiert bzw. gelöst werden.

Durch Verdrehung des zweiten Messelementes 6 gegenüber dem bspw. mit seiner Anlagekante 3 an einem Messobjekt anliegenden ersten Messelement 1 wird die Schiene 9 um die gemeinsame Achse 7 in eine jeweils gewünschte Winkelmessstellung verschwenkt. In dieser Winkelmessstellung können die beiden Messelemente 1, 6 durch Feststellmittel 15 lösbar gegeneinander verriegelt werden. Die Feststellmittel 15 weisen ein Feststellelement in Gestalt einer Klemmschraube 16 auf, die durch eine entsprechende Bohrung 17 eine Abdeckscheibe 18 durchgeführt ist, welche koaxial zu der gemeinsamen Achse 7 auf das zweite Messelement 6 aufgesetzt und an diesem mittels Schraubenbolzen 19 befestigt ist. Die Abdeckung 18 übergreift die mittels Schraubenbolzen 20 auf die Nabe 5 aufgeschraubte Ringscheibe 8 und verschließt damit den von der Nabe 5 eingeschlossenen zylindrischen Hohlraum 60 auf der Oberseite hermetisch. In dem Hohlraum 60 ist unterhalb der Ringscheibe 8 eine Klemmplatte 21 der Feststellmittel 15 angeordnet, die die Ringscheibe 8 untergreift und eine Gewindebohrung 22 aufweist, in die die Klemmschraube 15 eingeschraubt ist. Beim Anziehen der Klemmschraube 15 wird die als Klemmelement wirkende Klemmplatte 21 in der aus Figur 4 ersichtlichen Weise gegen die Unterseite der Ringscheibe 8 angepresst, während sich die Klemmschraube 15 auf der Abdeckung 18 axial abstützt. Damit sind die beiden Messelemente 1, 6 verdrehsicher gegeneinander verklemmt.

In dem Hohlraum 60 sind magnetfeldempfindliche Sensormittel 23 zur Erfassung der relativen Winkellage der beiden Messelemente 1, 6 untergebracht. Die Sensormittel 23 sind im Bereich der gemeinsamen Achse 7 angeordnet und, wie insbesondere aus den Figuren 1, 4 zu ersehen, vollständig in den Messelementen 1, 6 integriert, so dass keinerlei nach außen vorstehenden Gehäuseteile oder dergleichen vorhanden sind.

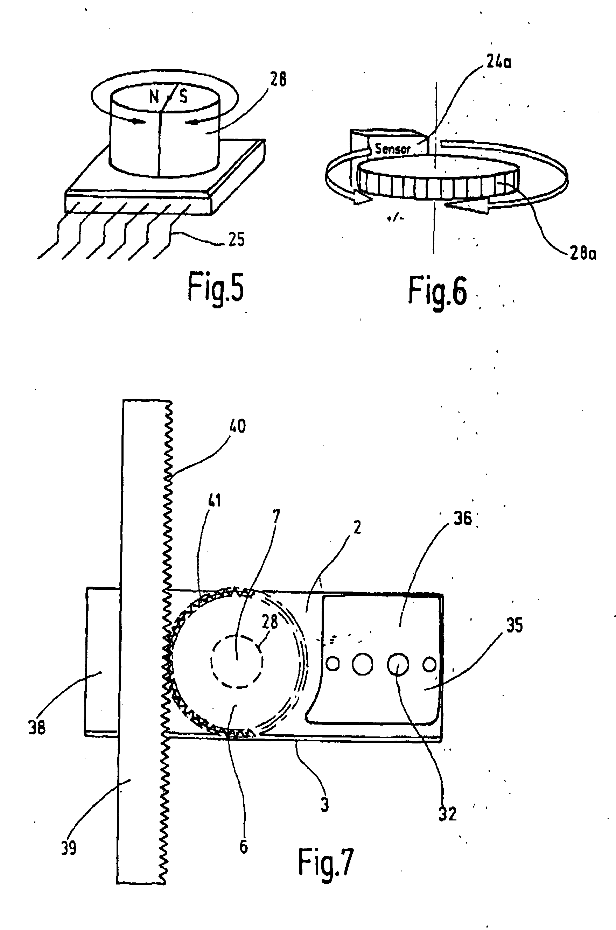

Die Sensormittel 23 weisen zwei berührungslos zusammenwirkende Sensorelemente auf, von denen ein Sensorelement 24 auf dem Halleffekt beruhend, als sogenannter Hallsensor ausgebildet ist, Ein solcher Hallsensor ist an sich bekannt und bspw. in der DE 102 01 875 C1 beschrieben. Wie insbesondere den Figuren 3 und 5 zu entnehmen, ist das Sensorelement 24 in Form eines Chips ausgebildet, das neben räumlich verteilt angeordneten Hallsensorelementen eine integrierte Signalausgangs- und Treiberschaltung für die Hallsensorelemente enthält und elektrische Anschlusselemente in Gestalt von Lötfahnen 25 aufweist. Der Chip ist in Gestalt eines flachen Blättchens ausgebildet, Seine typischen Abmessungen Länge x Breite x Dicke, liegen bei ca. 6 mm bis 7 mm x 5 mm bis 6 mm x 1,5 mm bis 2,5 mm, Das Sensorelement 24 ist auf einer Trägerplatine 27 angeordnet, die die elektrische Schaltung für die Stromversorgung, den Signalausgang, etc., trägt und auf dem Hoden des Hohlraums 60 angeordnet ist, wie dies aus den Figuren 3, 4 zu entnehmen ist.

Mit dem Sensorelement 24 wirkt berührungslos ein zweites Sensorelement 28 zusammen, das konzentrisch zu der gemeinsamen Achse 7 und dem ersten Sensorelement 24 an der Innenseite der Abdeckung 18 fest angeordnet ist. Das zweite Sensorelement 28 ist in Gestalt eines axial polarisierten zylindrischen Permanentmagneten ausgebildet, der auf seiner dem ersten Sensorelement 24 zugewandten Stirnseite zwei Bereiche N, S unterschiedlicher Polarität aufweist. Zwischen den beiden Sensorelementen 24, 28 ist ein Luftspalt 29 vorhanden. Dadurch, dass das zweite Sensorelement 28 an der Abdeckung 18 befestigt ist und diese gegen das das erste Sensorelement 24 tragende, erste Messelement 1 über die Nabe 5 und die Ringscheibe 8 starr abgestützt ist, ist unabhängig von der Drehbewegung des zweiten Messelementes 6 eine konstante Größe des Luftspaltes 29 gewährleistet, so dass auch die Voraussetzungen für eine hohe Messgenauigkeit gegeben sind. Das zweite Sensorelement 28 ragt durch eine Öffnung 300 der Klemmplatte 21 in den Hohlraum 60 der Nabe 5 und ist deshalb von der Feststelleinrichtung 15 mechanisch vollständig entkoppelt. Das bedeutet, dass das Festziehen oder Lösen der Klemmschraube 16 keinen die Messgenauigkeit beeinträchtigenden Einfluss auf die Relativlage der beiden Sensorelemente 24, 28 haben kann. Ein typischer Durchmesser des zylindrischen Permanentmagneten des zweiten Sensorelementes 28 beträgt bei den im Vorstehenden angegebenen Abmessungen des Chips des ersten Sensorelementes 24 ca. 6 mm.

Bei einer Verdrehung der beiden Messelemente i, 6 gegeneinander werden die beiden Sensorelemente 24, 28 um die gemeinsame Achse 7 gegeneinander verdreht, wobei das erste Sensorelement 24 an Signalausgängen 25 ein für die,jeweilige relative Winkellage zwischen den beiden Messelementen 1, 6 kennzeichnendes digitales Signal abgibt, das in einer in ihren Einzelheiten nicht weiter dargestellten Signalverarbeitungsschaltung verarbeitet wird, die über Leitungen 290 eine Messwertanzeigeeinrichtung 30 ansteuert, die auf dem Plattenteil 2 des ersten Messelementes 1 angeordnet ist.

Die Leitungen 290 (Kabel) sind mittels eines eingelassenen Kabelkanals in dem Maßelement 1 (Einfräsung und nachträglich vergossen) dermaßen geführt, dass die Schiene 9 frei drehbar unter dem Plattenteil 2 ist.

Die Anzeigeeinrichtung 30 weist eine auf einer Leiterplatte angeordnete LCD-Anzeigeeinrichtung 31 und Bedienelemente 32 auf. Ihr zugeordnet ist eine Stromquelle, die ebenfalls auf dem Plattenteil 2 vorgesehen und bei dem dargestellten Ausführungsbeispiel durch eine Batterie 33 gebildet sitzt, welche in einem Batteriefach 34 untergebracht ist. Insgesamt ist die Messwertanzeigeeinrichtung 30 durch ein Gehäuse 35 abgedeckt (Figur 1) das ein Fenster 36 aufweist, durch das die digitale Messwertanzeige sichtbar ist. Alternativ oder zusätzlich kann auf dem Plattenteil 2 auch eine elektrische Anschlusseinrichtung bspw. in Gestalt einer Steckerverbindung 37 vorgesehen sein (Figur 3), die es erlaubt, die für die Messwertanzeige dienenden Signale zu einer von dem Gerät getrennten Anzeigeeinrichtung zu übermitteln.

Das erste Sensorelement 24 gibt bspw. an einer SSI-Schnittstelle 12-Bit Datensignale ab, so dass sich eine Auflösung von weniger als 0,1° pro inkrementalem Schritt der relativen Drehbewegung zwischen den beiden Messelementen 1, 6 ergibt. Abhängig von den Genauigkeitsanforderungen an die Winkelmessung können auch Sensorelemente verwendet werden, die an ihrer SSI-Schnittstelle mehr oder weniger als 12-Bits-Daten abgeben.

Die im Vorstehenden beschriebenen magnetfeldempfindlichen Sensormittel 23 können alternativ nach dem, magnetoresistiven Prinzip arbeitend aufgebaut sein, wie dies in Figur 6 schematisch veranschaulicht ist. In diesem,Fall ist das eine Sensorelement 24a in Gestalt eines magnetoresistiven Sensors ausgebildet, der entweder in Chipform, ähnlich wie beschrieben oder in Gestalt einer Einheit (package) vorliegt, in der die Brückenschaltungen, etc. enthalten sind.

Das dem magnetoresistriven Sensorelement 24a zugeordnete Sensorelement 28a ist permanentmagnetisch. Es kann als Permanentmagnetring oder -ringsegment, mit' bspw. radialer Polarisierung ausgebildet sein, derart, dass es auf seinem Außenumfang abwechselnd Bereiche unterschiedlicher Polarität (+/-) aufweist. Alternativ kann es auch als ein entsprechend magnetisiertes Band gestaltet sein, das auf einem kreisrunden Träger aufgelegt ist, der ebenfalls koaxial zu der gemeinsamen Achse 7 angeordnet ist.

Insbesondere die anhand der Figuren 1 bis 5 beschriebene Ausführungsform mit Hallsensoren kann auch derart abgewandelt werden, dass das Handmessgerät zur Längenmessung benutzt werden kann. Diese abgewandelte Ausführungsform ist in Figur 7 schematisch veranschaulicht. Mit dem Winkelmessgerät nach den Figuren 1 bis 5 gleiche Teile sind mit gleichen Bezugszeichen versehen und nicht nochmals erläutert.

Das Plattenteil 2 ist in diesem Falle über die gemeinsame Drehachse 7 hinaus verlängert und mit einer Geradführung 38 versehen, in der ein längsverschiebliches stangenförmiges Messteil 39 rechtwinklig zu der Anlagekante 3 verschieblich geführt ist. Das Messteil 39 trägt eine Verzahnung 40, die mit einer an dem zweiten Messelement 6 vorgesehenen Umfangsverzahnung 41 in Eingriff steht. Eine Längsbewegung des Messteils 39 wird damit in eine Drehbewegung des Messelements 6 und des mit diesem verbundenen Sensorelementes 28a bezüglich des auf dem Plattenteil befestigen Sensorelements 24a umgesetzt, so dass eine genaue Längenmessung gegeben ist. Die Messung erfolgt in Absolutwerten, die bei 36 angezeigt werden. Die getriebliche Kopplung zwischen dem drehbaren Messelement 6 und,dem längsgeführten Messteil 39 kann auch durch andere Getriebemittel, einschließlich Zahnriemen, Planetengetrieben, etc. erfolgen; auch kann ein Feinverstellung integriert sein.

Die Sensorelemente 24, 28 sind in dem Hohlraum 60 durch die Nabe 5, die Abdeckung 18 und das erste Messelement 1 allseitig abgeschlossen, worauf bereits hingewiesen wurde. Diese Teile sind in der Regel aus Stahl oder einem anderen magnetisch abschirmenden Material hergestellt, wobei auch die Möglichkeit besteht, eine Abschirmung der magnetfeldempfindlichen Sensorelemente 24, 28 gegen störende magnetische Fremdfelder durch eine entsprechende abschirmende Beschichtung oder Verstärkungseinlage in den den Hohlraum 60 begrenzenden Teilen zu erzielen.

Die auf der Leiterplatte der LCD-Anzeigeeinrichtung 31 vorgesehene elektronische Signalverarbeitungsschaltung beinhaltet eine intelligente Steuerung (DSP )-Software, um eine höhere Gebrauchsdauer des Gerätes , d.h. eine Verlängerung der Batteriewechselzeiten zu erzielen. Diese intelligente Steuerung bewirkt bspw. ein automatisches Abschalten der Elektronik bei Nichtbenutzung nach ca. 30 s, ein kontinuierliches Abschalten mit einer Frequenz von z.B. 100 µs. Dieses Ab- und Einschalten ist aber nur mit einem Absolutmesssystem möglich, da ansonsten im abgeschalteten Zustand und bei einer Veränderung der relativen Winkellage der beiden Messteile 1, 6 zueinander beim Wiedereinschalten ein falscher Anzeigewert erscheint, so dass zunächst eine Neukalibrierung erforderlich wäre.

## Patentansprüche

1. Handgeführtes Winkel- oder Gradmessgerät mit:
- zwei um eine gemeinsame Achse (7) drehbar aneinander gelagerten Messelementen (1,6),
- magnetfeldempfindlichen Sensormitteln (23) zur Erfassung der relativen Winkellage der beiden Messelemente zueinander, die ein für einen Absolutwert der relativen Winkellage der beiden Messelemente kennzeichnendes Signal abgebend ausgebildet sind und wenigstens zwei berührungslos zusammenwirkende Sensorelemente (24,28) aufweisen, von denen eines (28) permanentmagnetische Mittel aufweist und an dem einen Messelement (6) und das andere an dem anderen Messelement (1) jeweils fest angeordnet ist und von denen wenigstens eines das für die jeweilige Winkellage kennzeichnende elektrische Signal abgeben kann,
- wobei wenigstens eines der beiden Messelemente (1,6) eine als Lagermittel für das andere Messelement dienende, zu der gemeinsamen Achse (7) koaxiale Nabe (5) aufweist, die mit einem Hohlraum (60) ausgebildet ist, in dem wenigstens ein Sensorelement (24,28) angeordnet ist, wobei der Hohlraum (60) der Nabe (5) allseitig geschlossen und das darin enthaltene Sensorelement nach außen hin abgekapselt ist,
- einer elektronischen Signalverarbeitungsschaltung (27) für das Signal von den Sensormitteln,
- einer Messwertanzeigeeinrichtung (30), die von der Signalverarbeitungsschaltung ansteuerbar ist und
- einer eigenen Stromquelle (33) zumindest für die Sensormittel und die Signalverarbeitungsschaltung, die auf einem der Messelemente oder einem mit diesen verbundenen Teil angeordnet ist.

2. Gerät nach Anspruch 1, **dadurch gekennzeichnet, dass** ein Sensorelement (28)auf dem Halleffekt beruhend ausgebildet ist.

3. Gerät nach Anspruch 1, **dadurch gekennzeichnet, dass** die permanentmagnetischen Mittel (28) einen axial polarisierten Permanentmagneten mit zumindest zwei Bereichen (N/S)unterschiedlicher Polarität auf der dem anderen Sensorelement (24) zugewandten Stirnseite aufweisen, der koaxial zu der gemeinsamen Drehachse (7) der beiden Messelemente angeordnet ist.

4. Gerät nach Anspruch 2 oder 3, **dadurch gekennzeichnet, dass** das eine Sensorelement (24) als Chip ausgebildet ist, das eine relative Drehbewegung des anderen Sensorelements (28) erfassende Hallsensoren, eine integrierte Signalausgangs- und Treiberschaltung für die Hallsensoren und elektrische Anschlussmittel (25) aufweist.

5. Gerät nach Anspruch 1, **dadurch gekennzeichnet, dass** ein Sensorelement als ein magnetoresistives Sensorelement (24a) ausgebildet ist.

6. Gerät nach Anspruch 5, **dadurch gekennzeichnet, dass** die Sensormittel einen radial oder axial polarisierte Bereiche unterschiedlicher Polarität aufweisenden Permanentmagnetring als ein Sensorelement (28a) aufweisen, der koaxial zu der gemeinsamen Achse (7) der beiden Messelemente angeordnet ist.

7. Gerät nach Anspruch 5, **dadurch gekennzeichnet, dass** die Sensormittel ein axial oder radial polarisiertes Permanentmagnetringsegment mit Bereichen unterschiedlicher Polarität als ein Sensorelement (28a) aufweisen, das im radialen Abstand von der gemeinsamen Achse (7) der beiden Messelemente angeordnet ist.

8. Gerät nach Anspruch 5, **dadurch gekennzeichnet, dass** die Sensormittel ein auf einen Träger angeordnetes permanentmagnetisches Band mit Bereichen unterschiedlicher Polarität als das eine Sensorelement (28a) aufweisen.

9. Gerät nach Anspruch nach einem der Ansprüche 5 bis 8, **dadurch gekennzeichnet, dass** das magnetoresistive Sensorelement in einer elektrischen.Brückenschaltung enthaltende magnetoresistive Sensorteilelemente aufweist, die gemeinsam zumindest mit der Brückenschaltung in einer elektrische Anschlussmittel aufweisenden einheitlichen Sensorbaueinheit (24a) zusammengefasst sind.

10. Gerät nach Anspruch 1, **dadurch gekennzeichnet, dass** die Sensormittel ein digitales Signal mit wenigstens 14 Bit ausgebend ausgebildet sind..

11. Gerät nach Anspruch 1, **dadurch gekennzeichnet, dass** ein Sensorelement (28) in den Hohlraum (60) der Nabe (5) hineinreichend an seinem zugeordneten Messelement (6) oder einen damit verbundenen Teil (18) befestigt ist.

12. Gerät nach Anspruch 1, **dadurch gekennzeichnet, dass** die Nabe (5) als Hohlzylinder ausgebildet ist, auf dessen Außenumfang das andere Messelement (6) drehbar gelagert ist und dessen Innenraum durch das andere Messelement oder durch ein mit diesem verbundenes Teil (18) verschlossen ist.

13. Gerät nach einem der vorhergehenden Ansprüche **dadurch gekennzeichnet, dass** es Feststellmittel (15) zur lösbaren gegenseitigen Verriegelung der beiden Messelemente (1,6) in einer jeweiligen Winkellage aufweist und dass die Feststellmittel von den Sensormitteln (23) entkoppelt sind.

14. Gerät nach Anspruch 13, **dadurch gekennzeichnet, dass** die Feststellmittel eine Feststellschraube (16) aufweisen, die an einem Messelement (6) gelagert ist und mit einem Klemmelement (21) zusammenwirkt, das an dem anderen Messelement (1) oder einem mit diesem verbundenen Teil angreifend ausgebildet ist und dass die Sensorelemente (24,28) von der Feststellschraube und dem Klemmelement im Wesentlichen unbeeinflussbar angeordnet sind.

15. Gerät nach einem der vorherigen Ansprüche, **dadurch gekennzeichnet, dass** wenigstens eines der Messelemente einen Messschenkel mit einer geraden Anlagekante oder - fläche (3)aufweist.

16. Gerät nach Anspruch 15, **dadurch gekennzeichnet, dass** der Messschenkel in Form einer Schiene (2) oder eines Lineals ausgebildet ist.

17. Gerät nach einem der Ansprüche 14 bis 16, **dadurch gekennzeichnet, dass** wenigstens eines der Messelemente mit einem linearverschieblich gelagerten Messschenkel (9) ausgebildet ist.

18. Gerät nach einem der vorherigen Ansprüche, **dadurch gekennzeichnet, dass** wenigstens eines der Messelemente über Getriebemittel (40,41) mit einem längsverschieblich gelagerten Messteil (39) gekoppelt ist, derart, dass unter Ausbildung eines Längenmessgerätes eine Längsverschiebung des Messteils bezüglich der gemeinsamen Achse (7) der beiden Messelemente in eine definierte Drehbewegung des zugeordneten Sensorelementes (28) umsetzbar ist.

## Claims

1. Hand-held goniometer with:
• two measuring elements (1, 6) mounted to be rotatable on one another around a common axis (7),
• magnetic field-sensitive sensor elements (23) for detecting the relative angular position of the two measuring elements relative to one another, which sensor elements are configured to emit a signal identifying an absolute value of the relative angular position of the two measuring elements and have at least two sensor elements (24, 28) cooperating in a non-contact manner, of which respectively one (28) has permanent magnetic elements and is fixedly arranged on one measuring element (6) and the other is fixedly arranged on the other measuring element (1), and of which sensor elements at least one can emit the electrical signal identifying the respective angular position,
• wherein at least one of the two measuring elements (1,6) has a hub (5), which is coaxial to the common axis (7) and serves as bearing element for the other measuring element and which is provided with a cavity (60), in which at least one sensor element (24, 28) is arranged, wherein the cavity (60) of the hub (5) is closed on all sides and the sensor element contained therein is closed off to the outside,
• an electronic signal processing circuit (27) for the signal from the sensor elements,
• a measured value display means (30), which can be actuated by the signal processing circuit and
• an own current source (33) at least for the sensor elements and the signal processing circuit, which is arranged on one of the measuring elements or a part connected thereto.

2. Device according to claim 1, **characterised in that** a sensor clement (28) is configured on the basis of the Hall effect.

3. Device according to claim 1, **characterised in that** the permanent magnetic elements (28) have an axially polarised permanent magnet with at least two regions (N/S) of different polarity on the end side facing the other sensor element (24), which is arranged coaxially to the common rotational axis (7) of the two measuring elements.

4. Device according to claim 2 or 3, **characterised in that** one sensor element (24) is configured as a chip, which has Hall sensors detecting a relative rotational movement of the other sensor element (28), an integrated signal output and driver circuit for the Hall sensors and electrical connection means (25).

5. Device according to claim 1, **characterised in that** a sensor element is configured as a magneto-resistive sensor element (24a).

6. Device according to claim 5, **characterised in that** the sensor elements have a permanent magnet ring having radially or axially polarised regions of different polarity as a sensor element (28a), which is arranged coaxially to the common axis (7) of the two measuring elements,

7. Device according to claim 5, **characterised in that** the sensor elements have a permanent magnet ring segment having axially or radially polarised regions of different polarity as a sensor element (28a), which is arranged at radial distance from the common axis (7) of the two measuring elements,

8. Device according to claim 5, **characterised in that** the sensor elements have a permanent magnetic band with regions of different polarity arranged on a support as the one sensor element (28a).

9. Device according to one of claims 5 to 8, **characterised in that** the magneto-resistive sensor element has magneto-resistive sensor part elements contained in an electric bridge circuit, which are assembled jointly at least with the bridge circuit in a uniform sensor structural unit (24a) having clement connection means.

10. Device according to claim 1, **characterised in that** the sensor elements are configured to emit a digital signal with at least 14 bits.

11. Device according to claim 1, **characterised in that** a sensor element (28) is fastened to its associated measuring element (6) or a part (18) connected thereto to extend into the cavity (60) of the hub (5).

12. Device according to claim 1, **characterised in that** the hub (5) is configured as a hollow cylinder, on the outer periphery of which the other measuring element (6) is rotatably mounted and the interior of which is closed by the other measuring element (18) or by a part connected thereto.

13. Device according to one of the preceding claims, **characterised in that** it has locking elements (15) to detachably lock the two measuring elements (1, 6) in relation to one another in a respective angular position, and that the locking elements are decoupled from the sensor elements (23).

14. Device according to claim 13, **characterised in that** the locking elements have a locking screw (16), which is mounted on a measuring element (6) and cooperates with a clamping element (21), which is configured to engage on the other measuring element (1) or a part connected thereto, and that the sensor elements (24, 28) arc arranged so that they largely cannot be influenced by the locking screw and the clamping element.

15. Device according to one of the preceding claims, **characterised in that** at least one of the measuring elements has a blade with a straight abutment edge or surface (3).

16. Device according to claim 15, **characterised in that** the blade is configured in the form of a rail (2) or a ruler

17. Device according to one of claims 14 to 16, **characterised in that** at least one of the measuring elements is configured with a blade (9) mounted to be linearly displaceable.

18. Device according to one of the preceding claims, **characterised in that** at least one of the measuring elements is coupled by means of gear elements (40, 41) to a measuring part (39) mounted to be longitudinally displaceable in such a manner that a longitudinal displacement of the measuring part with respect to the common axis (7) of the two measuring elements can be converted into a defined rotational movement of the associated sensor element (28) with configuration of a length measuring device.

## Revendications

1. Goniomètre portable, comprenant:
- deux éléments de mesure (1, 6) montés l'un sur l'autre avec possibilité de rotation autour d'un axe (7) commun,
- des moyens de détection (23) sensibles aux champs magnétiques, destinés à mesurer la position angulaire relative des deux éléments de mesure, l'un par rapport à l'autre, qui sont conçus pour émettre un signal caractérisant une valeur absolue de la position angulaire relative des deux éléments de mesure et présentent au moins deux éléments détecteurs (24, 28) coopérant sans contact, dont l'un (28) comporte des moyens à aimantation permanente et est disposé de manière fixe sur un élément de mesure (6) et l'autre est disposé de manière fixe sur l'autre élément de mesure (1), et dont au moins un peut émettre le signal électrique caractérisant la position angulaire respective,
- au moins l'un des deux éléments de mesure (1, 6) présentant un moycu (5) qui sert de moyen se support pour l'autre élément de mesure, est coaxial avec l'axe (7) commun et est réalisé avec une cavité (60) dans laquelle est disposé au moins un élément détecteur (24, 28), la cavité (60) du moyeu (5) étant fermée sur tous les côtés, et l'élément détecteur logé dans celle-ci étant blindé vis-à-vis de l'extérieur,
- un circuit électronique de traitement de signaux (27) pour le signal des moyens de détection,
- un dispositif d'affichage de valeurs de mesure (30) qui peut être activé par le circuit de traitement de signaux, et
- sa propre source de courant (33), au moins pour les moyens de détection et le circuit de traitement de signaux, qui est disposée sur l'un des éléments de mesure ou un élément relié à ceux-ci.

2. Appareil selon la revendication 1, **caractérisé par le fait qu'**un élément détecteur (28) est réalisé selon le principe de l'effet Hall.

3. Appareil selon la revendication 1, **caractérisé par le fait que** les moyens (28) à aimantation permanente présentent un aimant permanent à polarisation axiale, avec au moins deux zones (N/S) de polarités différentes sur la face frontale tournée vers l'autre élément détecteur (24), qui est disposé coaxialement avec l'axe de rotation (7) commun des deux éléments de mesure.

4. Appareil selon la revendication 2 ou 3, **caractérisé par le fait que** l'un des éléments détecteurs (24) est réalisé sous forme de puce électronique qui présente des capteurs à effet Hall mesurant un mouvement rotatif relatif de l'autre élément détecteur (28), un circuit intégré d'attaque et de sortie de signal pour les capteurs à effet Hall, et des moyens de connexion (25) électriques.

5. Appareil selon la revendication 1, **caractérisé par le fait qu'**un élément détecteur est réalisé sous forme de capteur magnétorésistif (24a).

6. Appareil selon la revendication 5, **caractérisé par le fait que** les moyens de détection comportent, en tant qu'élément détecteur (28a), un aimant permanent annulaire, présentant des zones à polarisation radiale ou axiale, de polarités différentes, qui est disposé coaxialement avec l'axe (7) commun des deux éléments de mesure.

7. Appareil selon la revendication 5, **caractérisé par le fait que** les moyens de détection comportent, en tant qu'élément détecteur (28a), un segment d'aimant permanent annulaire à polarisation radiale ou axiale, présentant des zones de polarités différentes, qui est disposé à distance radiale de l'axe (7) commun des deux éléments de mesure.

8. Appareil selon la revendication 5, **caractérisé par le fait que** les moyens de détection présentent, en tant que l'un (28a) des éléments détecteurs, une bande à aimantation permanente qui est disposée sur un support et comporte des zones de polarités différentes.

9. Appareil selon une des revendications 5 à 8, **caractérisé par le fait que** le capteur magnétorésistif présente des sous-éléments capteurs magnétorésistifs qui sont contenus dans un montage en pont électrique et sont regroupés au moins avec le montage en pont dans un module de capteur uniforme, présentant des moyens de connexion électriques.

10. Appareil selon la revendication 1, **caractérisé par le fait que** les moyens de détection sont conçus de manière à émettre un signal numérique d'au moins 14 bits.

11. Appareil selon la revendication 1, **caractérisé par le fait qu'**un élément détecteur (28) est fixé à son élément de mesure (6) associé ou à une pièce (18) reliée à celui-ci, en pénétrant dans la cavité (60) du moyeu (5).

12. Appareil selon la revendication 1, **caractérisé par le fait que** le moyeu (5) est réalisé sous forme de cylindre creux, sur le pourtour extérieur duquel l'autre élément de mesure (6) est monté avec possibilité de rotation, et dont l'espace intérieur est fermé par l'autre élément de mesure ou par une pièce (18) reliée à celui-ci.

13. Appareil selon une des revendications précédentes, **caractérisé par le fait qu'**il présente des moyens de blocage (15) pour le verrouillage réciproque libérable des deux éléments de mesure (1, 6) dans une position angulaire respective, et **par le fait que** les moyens de blocage sont découplés des moyens de détection (23).

14. Appareil selon la revendication 13, **caractérisé par le fait que** les moyens de blocage présentent une vis de blocage (16) qui est montée sur un élément de mesure (6) et coopère avec un élément de serrage (21) qui est agencé de manière à agir sur l'autre élément de mesure (1) ou une pièce reliée à celui-ci, et **par le fait que** les éléments détecteurs (24, 28) sont disposés de manière à ne pas être influencés de façon sensible par la vis de blocage et l'élément de serrage.

15. Appareil selon une des revendications précédentes, **caractérisé par le fait qu'**au moins un des éléments de mesure présente un bras de mesure avec un bord ou une surface d'appui (3) rectiligne.

16. Appareil selon la revendication 15, **caractérisé par le fait que** le bras de mesure est réalisé sous la forme d'un rail (2) ou d'une règle.

17. Appareil selon une des revendications 14 à 16, **caractérisé par le fait qu'**au moins un des éléments de mesure est réalisé avec un bras de mesure (9) monté avec possibilité de déplacement linéaire.

18. Appareil selon une des revendications précédentes, **caractérisé par le fait qu'**au moins un des éléments de mesure est accouplé à un élément de mesure (39) monté avec possibilité de déplacement longitudinal, par l'intermédiaire de moyens d'engrenage (40, 41), de manière telle que, en formant un dispositif de mesure de longueurs, un déplacement longitudinal de l'élément de mesure par rapport à l'axe (7) commun des deux éléments de mesure peut être transformé en un mouvement rotatif défini de l'élément détecteur (28) associé.
